# EUROPÄISCHE PATENTSCHRIFT

(11) **EP 2 881 597 B1**
(45) Veröffentlichungstag und Bekanntmachung des Hinweises auf die Patenterteilung: **06.04.2016**
(21) Anmeldenummer: 14193449.7
(22) Anmeldetag: 17.11.2014
(51) Int. Cl.: F16B 2/22, F16B 2/24, F16B 9/02, F16L 3/233, H02G 3/32

(54) **Befestigungsvorrichtung für Kabel**
Fastening device for cables
Dispositif de fixation pour câbles

(30) Priorität: 09.12.2013 FR 1362277
(43) Veröffentlichungstag der Anmeldung: 10.06.2015
(73) Patentinhaber: TRW Automotive Electronics & Components GmbH, 78315 Radolfzell (DE)
(72) Erfinder: Kuhm, Michel, 67340 Ingwiller (FR)
(74) Vertreter: Prinz & Partner mbB

(56) Entgegenhaltungen:
- FR-A1- 2 955 711
- JP-A- H10 331 814
- JP-A- 2002 067 830
- JP-A- 2008 259 363
- US-B1- 6 220 554

## Beschreibung

Die vorliegende Erfindung betrifft eine Befestigungsvorrichtung für Kabel.

Insbesondere in der Automobilindustrie sind unterschiedliche Befestigungsvorrichtungen bekannt, mit denen einzelne Kabel oder Kabelbäume z.B. an einem Blechteil fixiert werden können.

Bei einem Typ von Befestigungsvorrichtung wird diese auf einen überstehenden Blechfalz am Fahrzeug, eine Blechkante, aufgesteckt bzw. aufgeklemmt. Diese Befestigungsvorrichtungen weisen z.B. Kabelbänder oder sonstige Haltemittel auf, mittels derer die Kabel befestigt und geführt werden können.

Aus der DE 20 2007 000 938 U1 ist bereits eine Befestigungsvorrichtung für Kabel bekannt, die auf eine Kante aufgesetzt werden kann und die ein Kabelbandschloss mit einem in das Kabelbandschloss einführbaren Kabelband aufweist.

Die DE 10 2008 059 360 A1 offenbart ebenfalls eine Befestigungsvorrichtung, die auf eine Kante aufgesetzt werden kann. Die Befestigungsvorrichtung weist eine Haltevorrichtung zur gleichzeitigen Befestigung mehrerer Kabelbänder auf.

Als problematisch bei den bislang bekannten Befestigungsvorrichtungen für Kabel hat sich herausgestellt, dass im Rahmen der Montage der Befestigungsvorrichtungen Kabel in den Aufsteckspalt der Befestigungsvorrichtung gelangen können. Dies führt dazu, dass die Kabel wieder aus dem Aufsteckspalt entfernt werden müssen, bevor die Befestigungsvorrichtung auf die Kante aufgesetzt wird. Da innerhalb des Aufsteckspalts jedoch Widerhaken angeordnet sind, mittels denen sich die Befestigungsvorrichtung auf dem Blechfalz verhakt, können die Kabel hierdurch beschädigt werden. Es sind daher beispielweise aus JP 2008 259363 und FR 2 955 711 Schutzlaschen bekannt, die den Ausfsteckspalt abdecken.

Es ist die Aufgabe der Erfindung, eine solche Befestigungsvorrichtung für Kabel in vorteilhafter Weise weiterzubilden, insbesondere dahingehend, dass das Risiko einer Beschädigung der Kabel vor der Montage der Befestigungsvorrichtung am Blechfalz verringert ist.

Diese Aufgabe wird erfindungsgemäß gelöst durch eine Befestigungsvorrichtung mit den Merkmalen des Anspruchs 1. Danach wird eine Befestigungsvorrichtung für Kabel bereitgestellt mit wenigstens einem Kantenklippteil zur Anbringung der Befestigungsvorrichtung an einer Kante eines Basisteils, wobei das Kantenklippteil einen Aufsteckspalt aufweist, in den die Kante eingeführt wird beim Aufstecken des Kantenklippteils auf die Kante, wobei wenigstens eine Schutzlasche vorgesehen ist, die an einer Begrenzungswand des Aufsteckspalts angelenkt ist und sich zu einer gegenüberliegenden Begrenzungswand des Aufsteckspalts hinüber erstreckt, wobei für die Schutzlasche auf der gegenüberliegenden Begrenzungswand des Aufsteckspalts eine Ausnehmung vorgesehen ist, in die die Spitze der Schutzlasche im unbelasteten Zustand des Kantenklippteils teilweise eingreift. Die Schutzlasche ist in den Aufsteckspalt eindrückbar, so dass sie das Aufstecken der Befestigungsvorrichtung auf den Blechfalz nicht behindert. Im unmontierten Zustand verhindert die wenigstens eine Schutzlasche aber einfach und zuverlässig ein Eindringen von Kabeln in den Aufsteckspalt. Die Ausnehmung verhindert, dass die Schutzlasche seitlich verschoben wird, wodurch sie nicht mehr auf der gegenüberliegenden Seite aufliegen würde und in den Aufsteckspalt rutschen könnte

Vorzugsweise können wenigstens zwei Schutzlaschen vorgesehen sein. Dadurch kann noch besser ein Eindringen von Kabeln in den Aufsteckspalt verhindert werden.

Es ist vorteilhafterweise denkbar, dass jeweils eine Schutzlasche an jeweils einem Ende des Aufsteckspalts angeordnet ist. Da ein Kabel üblicherweise an den Enden des Aufsteckspalts in diesen eindringt, verhindert eine derartige Anordnung das Eindringen von Kabeln bereits im Ansatz. Die Anordnung der Schutzlaschen an den Enden des Aufsteckspalts ist auch fertigungstechnisch günstig, weil die Schutzlaschen sich an den Enden des Aufsteckspalts einfacher ausbilden oder anformen lassen.

Des Weiteren kann vorgesehen sein, dass eine erste Schutzlasche auf der einen Begrenzungswand des Aufsteckspalts angeordnet ist und dass eine zweite Schutzlasche auf der gegenüberliegenden Begrenzungswand des Aufsteckspalts angeordnet ist. Diese diagonale Anordnung, d.h. die Anordnung einer Schutzlasche auf der einen Begrenzungswand des Aufsteckspalts und die Anordnung einer zweiten Schutzlasche auf der anderen Seite des Aufsteckspalts auf der gegenüberliegenden Begrenzungswand des Aufsteckspalts, erschwert es beispielsweise einem Kabel, an den Schutzlaschen vorbei in den Aufsteckspalt hinein einzudringen.

Darüber hinaus ist möglich, dass im Kantenklippteil ein Metallteil eingesetzt ist, das das Kantenklippteil verstärkt.

Das Metallteil kann L-förmig sein. In diesem Fall kann nur eine Seitenwand des Kantenklippteils durch das Metallteil verstärkt sein.

Denkbar ist aber auch, dass das Metallteil U-förmig ausgebildet ist. Durch die Verstärkung des Kantenklippteils mit dem Metallteil kann die Klemmwirkung und Haltbarkeit der Befestigungsvorrichtung verbessert werden.

Des Weiteren ist denkbar, dass das Metallteil eine aufbiegbare Spange oder ein Federblech ist, die bzw. das die Öffnung des Kantenklippteils teilweise verengt, wenn die Kante nicht in das Kantenklippteil eingesetzt ist.

Das Metallteil kann eine Vorspannung aufweisen und zieht den Aufsteckspalt zusammen. Der Aufsteckspalt wird durch die Schutzlaschen verschlossen und durch das Einsetzen der Kante auseinandergedrückt. Dadurch ergibt sich der Vorteil, dass sich die Befestigungsvorrichtung klemmend an der Kante festhält. Außerdem wird vorteilhafterweise die Schutzlasche gegen die gegenüberliegende Begrenzungswand des Aufsteckspalts gedrückt, was ebenfalls ein Eindringen eines Kabels in den Aufsteckspalt erschwert bzw. verhindert.

Das Metallteil kann in einer möglichen Ausführungsform zumindest eine Haltezunge aufweisen, die in den Aufsteckspalt hineinragt und bei aufgesteckter Befestigungsvorrichtung an der Kante anliegt. Denkbar ist auch, dass das Metallteil Haltezungen für die Kante auf beiden Seiten des Aufsteckspalts aufweist, so dass auf beiden Seiten der Kante Haltezungen anliegen.

Außerdem ist möglich, dass die Schutzlaschen und die Haltezungen nach dem Aufsetzen des Kantenklippteils auf die Kante nicht übereinanderliegen. Die Schutzlasche bzw. die Schutzlaschen und die Haltezunge bzw. die Haltezungen können so angeordnet sein, dass sie in einem jeweils anderen Bereich der Kanten aufliegen. Dadurch wird die Haltekraft der Haltezungen nicht beeinträchtigt.

Insbesondere kann vorgesehen sein, dass die Haltezungen in einem Bereich im Aufsteckspalt angeordnet sind, den die Schutzlaschen nicht erreichen können, wenn sie in den Aufsteckspalt hineingedrückt sind. Dieser Bereich liegt vorzugsweise unterhalb der Spitzen der Schutzlaschen, wenn die Schutzlaschen in den Aufsteckspalt hineingedrückt sind.

Die Ausnehmung ist beispielsweise abgerundet.

Besonders vorteilhaft ist es, wenn die Spitze der Schutzlasche ebenfalls abgerundet ist.

Die Schutzlasche kann in den Aufsteckspalt hinein zumindest teilweise gebogen sein. Dies erleichtert das Aufsetzen des Kantenklippteils auf die Kante.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Figur 1 ein Ausführungsbeispiel einer erfindungsgemäße Befestigungsvorrichtung in einer perspektivischen Darstellung;
- Figur 2 eine seitliche Schnittdarstellung der Befestigungsvorrichtung gemäß Figur 1;
- Figur 3 eine seitliche Schnittdarstellung der Befestigungsvorrichtung gemäß Figur 1 mit eingesetzter Kante;
- Figur 4 ein zweites Ausführungsbeispiel einer erfindungsgemäßen Befestigungsvorrichtung;
- Figur 5 ein drittes Ausführungsbeispiel einer erfindungsgemäßen Befestigungsvorrichtung.

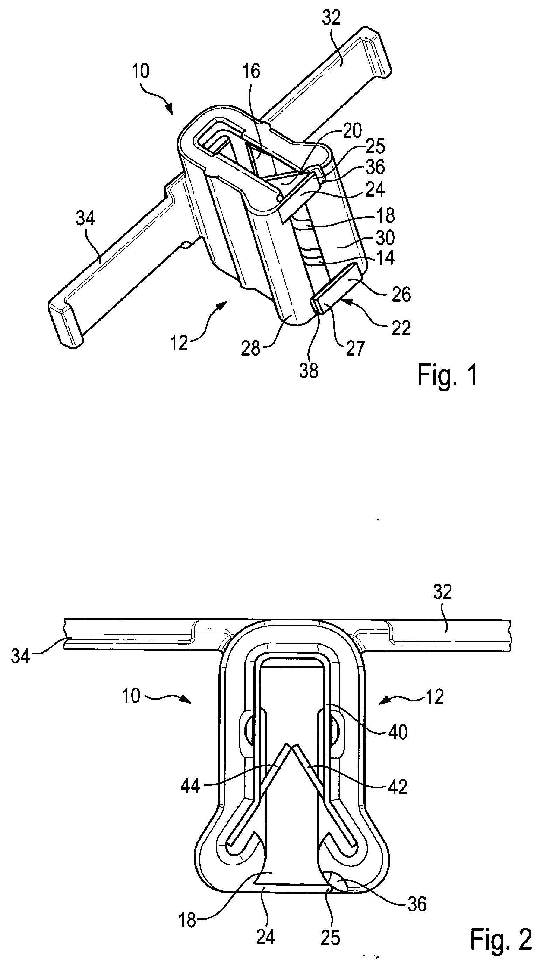

Figur 1 zeigt eine perspektivische Ansicht auf ein Ausführungsbeispiel einer erfindungsgemäßen Befestigungsvorrichtung 10 für Kabel.

Die Befestigungsvorrichtung 10 weist ein Kantenklippteil 12 zur Anbringung der Befestigungsvorrichtung 10 an einer nicht näher dargestellten Kante eines Basisteils auf, insbesondere einem Blechfalz.

Das Kantenklippteil 12 weist eine Öffnung 14 auf, mit der das Kantenklippteil 12 auf die Kante aufgesetzt wird. Die Öffnung 14 hat einen U-förmigen Querschnitt und weist zwei Seitenflächen 16 und einen Aufsteckspalt 18 auf.

An den beiden äußeren Enden 20 und 22 des Aufsteckspalts 18 ist jeweils eine Schutzlasche 24 und 26 vorgesehen.

Die Schutzlaschen 24 und 26 sind jeweils an einer Begrenzungswand 28 bzw. 30 des Aufsteckspalts 18 angelenkt und erstrecken sich jeweils zu der gegenüberliegenden Begrenzungswand 30 bzw. 28 des Aufsteckspalts 18 hinüber.

Die erste Schutzlasche 24 ist auf der einen Begrenzungswand 28 des Aufsteckspalts 18 angeordnet und die zweite Schutzlasche 26 ist auf der gegenüberliegenden Begrenzungswand 30 des Aufsteckspalts 18 angeordnet. Folglich sind die Schutzlaschen 24 und 26 diagonal zueinander angeordnet.

Die Befestigungsvorrichtung 10 weist an dem Ende, an dem sich der Grund der Öffnung 14 befindet, zwei Befestigungsflügel 32, 34 auf.

Für die Schutzlaschen 24 und 26 ist jeweils auf der gegenüberliegenden Begrenzungswand 28 bzw. 30 des Aufsteckspalts 18 jeweils eine Ausnehmung 36, 38 vorgesehen, in die die Spitze 25 bzw. 27 der Schutzlaschen 24 und 26 im unbelasteten Zustand des Kantenklippteils 12 teilweise eingreift.

Figur 2 zeigt eine Schnittdarstellung der Befestigungsvorrichtung gemäß Figur 1. Im Kantenklippteil 12 ist ein Metallteil 40 eingesetzt, das das Kantenklippteil 12 verstärkt.

Das Metallteil 40 ist ein Federblech, das den Aufsteckspalt 18 des Kantenklippteils 12 teilweise verengt, wenn die Kante nicht in das Kantenklippteil 12 eingesetzt ist.

Das Metallteil 40 weist ferner zwei Haltezungen 42, 44 auf, die gegenüberliegend angeordnet sind. Die Haltezungen 42, 44 ragen in den Aufsteckspalt 18 hinein.

Die Schutzlaschen 24, 26 und die Haltezungen 42, 44 sind so angeordnet, dass sie in einem jeweils anderen Bereich der Kante K aufliegen.

Die Montage und Funktion der Befestigungsvorichtung 10 wird nachfolgend beschrieben:
Die Befestigungsvorrichtung 10 wird mit dem Aufsteckspalt 18 auf die Kante K aufgesetzt.

Durch das Aufstecken der Befestigungsvorrichtung 10 werden die Schutzlaschen 24 und 26 in den Aufsteckspalt 18 hinein eingedrückt.

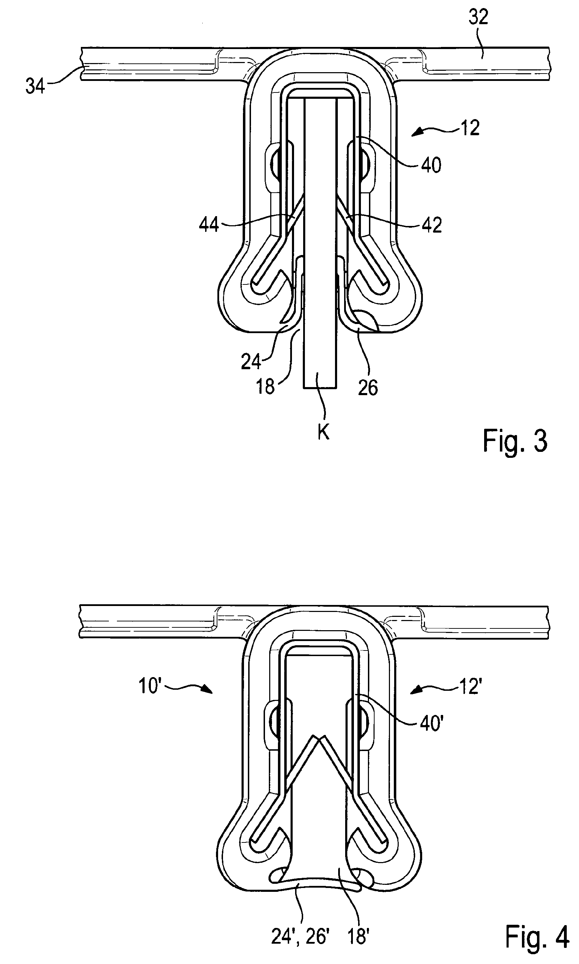

Wie in Figur 3 gezeigt, liegen die Haltezungen 42, 44 bei aufgesteckter Befestigungsvorrichtung 10 an der Kante K an. Dadurch wird die Befestigungsvorrichtung 10 mit der Kante K verklemmt.

Die Schutzlaschen 24, 26 und die Haltezungen 42, 44 liegen nach dem Aufsetzen des Kantenklippteils 12 auf die Kante K nicht übereinander.

Dadurch, dass die Schutzlaschen 24, 26 und die Haltezungen 42, 44 so angeordnet sind, dass sie in einem jeweils anderen Bereich der Kante K aufliegen, wird die Haltekraft der Haltezungen 42, 44 nicht beeinträchtigt. Denn so wird sichergestellt, dass die Haltezungen 42, 44 direkt am Blechfalz K anliegen und die Schutzlaschen 24, 26 sich zwischen die Haltezungen 42, 44 und den Blechfalz K schieben können.

Die Haltezungen 42, 44 sind erst in einem Bereich im Aufsteckspalt 18 angeordnet, den die Schutzlaschen 24, 26 nicht erreichen können, wenn sie in den Aufsteckspalt hineingedrückt sind.

Mittels der Befestigungsflügel 32, 34 können Kabelstränge oder Leitungen geführt bzw. befestigt werden.

Die Befestigung der Kabel erfolgt üblicherweise nach dem Aufsetzen der Befestigungsvorrichtung 10 auf die Kante K. Selbst wenn die Kabel mit der Befestigungsvorrichtung zusammentreffen, bevor diese auf den Blechfalz aufgesetzt ist, können sie nicht in den Aufsteckspalt hineingeraten, da die Schutzlaschen diesen abdecken, solange die Befestigungsvorrichtung nicht auf den Blechfalz aufgesetzt ist.

Figur 4 zeigt eine weitere Ausführungsform der Befestigungsvorrichtung der vorliegenden Erfindung.

Die gezeigte Befestigungsvorrichtung 10' ist im Wesentlichen mit der Befestigungsvorrichtung 10 gemäß den Figuren 1 und 2 identisch und weist im Wesentlichen dieselben Merkmale und Vorteile auf.

Auch hier ist im Kantenklippteil 12' ein Metallteil 40' eingesetzt, das das Kantenklippteil 12' verstärkt.

Die Befestigungsvorrichtung 10' unterscheidet sich nur dadurch von der Befestigungsvorrichtung 10 gemäß den Figuren 1 bis 3, dass die Schutzlaschen 24', 26' in Richtung in den Aufsteckspalt 18' hinein zumindest teilweise gebogen sind.

Dies erleichtert das Aufsetzen des Kantenklippteils 12' der Befestigungsvorrichtung 10' auf die Kante.

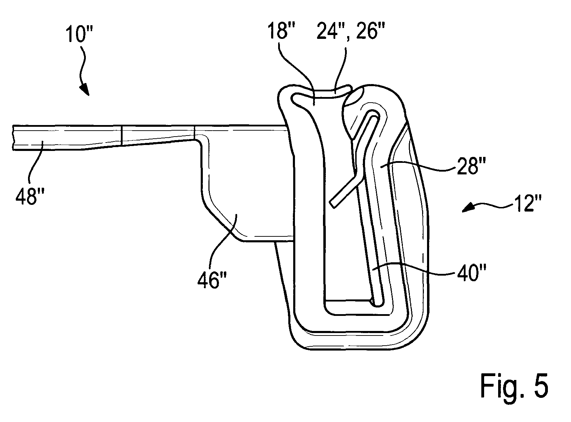

Figur 5 zeigt auch eine weitere Ausführungsform der Befestigungsvorrichtung der vorliegenden Erfindung.

Die in Figur 5 gezeigte erfindungsgemäße Befestigungsvorrichtung 10" weist im Wesentlichen sämtliche Merkmale und Vorteile der beiden vorgenannten Ausführungsbeispiele der Befestigungsvorrichtungen 10, 10' gemäß den Figuren 1 bis 4 auf.

Hier sind ebenfalls an den beiden Enden des Aufsteckspalts 18" jeweils Schutzlaschen 24", 26" vorgesehen, die wie im Ausführungsbeispiel gemäß Figur 4 in Richtung auf den Aufsteckspalt 18" zumindest teilweise gebogen sind.

Ein Unterschied besteht jedoch darin, dass das in das Kantenklippteil 12" eingesetzte Metallteil 40" L-förmig ausgebildet ist. Folglich ist nur die eine Begrenzungswand 28" mit dem Metallteil 40" verstärkt.

Auf der dem Metallteil 40" abgewandten Seite ist ein Kabelbandschloss 46" mit einem in das Kabelbandschloss 46" einführbaren Kabelband 48" vorgesehen.

## Patentansprüche

1. Befestigungsvorrichtung (10; 10'; 10") für Kabel mit wenigstens einem Kantenklippteil (12; 12', 12") zur Anbringung der Befestigungsvorrichtung (10; 10'; 10") an einer Kante (K) eines Basisteils, wobei das Kantenklippteil (12; 12', 12") einen Aufsteckspalt (18; 18'; 18") aufweist, in den die Kante (K) eingeführt wird beim Aufstecken des Kantenklippteils (12; 12', 12") auf die Kante (K), wobei wenigstens eine Schutzlasche (24, 26; 24', 26'; 24", 26") vorgesehen ist, die an einer Begrenzungswand (28, 30) des Aufsteckspalts (18; 18'; 18") angelenkt ist und sich zu einer gegenüberliegenden Begrenzungswand (28, 30) des Aufsteckspalts (18; 18'; 18") hinüber erstreckt, **dadurch gekennzeichnet, dass** für die Schutzlasche (24, 26) auf der gegenüberliegenden Begrenzungswand (28, 30) des Aufsteckspalts (18) eine Ausnehmung (36, 38) vorgesehen ist, in die die Spitze (25, 27) der Schutzlasche (24, 26) im unbelasteten Zustand des Kantenklippteils (12) teilweise eingreift.

2. Befestigungsvorrichtung (10; 10'; 10") nach Anspruch 1, **dadurch gekennzeichnet, dass** wenigstens zwei Schutzlaschen (24, 26; 24', 26'; 24", 26") vorgesehen sind.

3. Befestigungsvorrichtung (10; 10'; 10") nach Anspruch 1 oder 2, **dadurch gekennzeichnet, dass** jeweils eine Schutzlasche (24, 26; 24', 26'; 24", 26") an jeweils einem Ende des Aufsteckspalts (18; 18'; 18") angeordnet ist.

4. Befestigungsvorrichtung (10; 10'; 10") nach einem der Ansprüche 2 oder 3, **dadurch gekennzeichnet, dass** eine erste Schutzlasche (24; 24'; 24") auf der einen Begrenzungswand des Aufsteckspalts (18; 18'; 18") angeordnet ist und dass eine zweite Schutzlasche (26; 26'; 26") auf der gegenüberliegenden Begrenzungswand des Aufsteckspalts (18; 18'; 18") angeordnet ist.

5. Befestigungsvorrichtung (10; 10'; 10") nach einem der vorhergehenden Ansprüche, **dadurch gekennzeichnet, dass** im Kantenklippteil (12; 12', 12") ein Metallteil (40) eingesetzt ist, das das Kantenklippteil (12; 12', 12") verstärkt.

6. Befestigungsvorrichtung (10; 10'; 10") nach Anspruch 5, **dadurch gekennzeichnet, dass** das Metallteil (40; 40'; 40") eine aufbiegbare Spange oder ein Federblech ist, die den Aufsteckspalt (18; 18'; 18") des Kantenklippteils (12; 12', 12") teilweise verengt, wenn die Kante (K) nicht in das Kantenklippteil (12; 12', 12") eingesetzt ist.

7. Befestigungsvorrichtung (10) nach Anspruch 5 oder 6, **dadurch gekennzeichnet, dass** das Metallteil (40) zumindest eine Haltezunge (42, 44) aufweist, die in dem Aufsteckspalt (18; 18'; 18") hineinragt und bei aufgesteckter Befestigungsvorrichtung (10) an der Kante (K) anliegt.

8. Befestigungsvorrichtung (10) nach Anspruch 7, **dadurch gekennzeichnet, dass** die Schutzlasche (24, 26) und die Haltezunge (42, 44) nach dem Aufsetzen des Kantenklippteils (12) auf die Kante (K) nicht übereinanderliegen.

9. Befestigungsvorrichtung (10'; 10") nach einem der vorhergehenden Ansprüche, **dadurch gekennzeichnet, dass** die Schutzlasche (24', 26'; 24", 26") in den Aufsteckspalt (18', 18") hinein zumindest teilweise gebogen ist.

## Claims

1. A fixing device (10; 10'; 10") for cables with at least one edge clip part (12; 12', 12") for mounting the fixing device (10; 10'; 10") on an edge (K) of a base part, wherein the edge clip part (12; 12', 12") includes a plug-on gap (18; 18'; 18") into which the edge (K) is introduced when plugging the edge clip part (12; 12', 12") onto the edge (K), wherein at least one protective tab (24, 26; 24', 26'; 24", 26") is provided which is articulated to a boundary wall (28, 30) of the plug-on gap (18; 18'; 18") and extends across to an opposed boundary wall (28, 30) of the plug-on gap (18; 18'; 18"), **characterized in that** a recess (36, 38) for the protective tab (24, 26) is provided on the opposed boundary wall (28, 30) of the plug-on gap (18), the tip (25, 27) of the protective tab (24, 26) partly engaging into the recess (36, 38) in the unloaded condition of the edge clip part (12).

2. The fixing device (10; 10'; 10") according to claim 1, **characterized in that** at least two protective tabs (24, 26; 24', 26'; 24", 26") are provided.

3. The fixing device (10; 10'; 10") according to claim 1 or 2, **characterized in that** one protective tab (24, 26; 24', 26'; 24", 26") each is arranged at a respective end of the plug-on gap (18; 18'; 18").

4. The fixing device (10; 10'; 10") according to either of claims 2 or 3, **characterized in that** a first protective tab (24; 24'; 24") is arranged on one boundary wall of the plug-on gap (18; 18'; 18") and that a second protective tab (26; 26'; 26") is arranged on the opposed boundary wall of the plug-on gap (18; 18'; 18").

5. The fixing device (10; 10'; 10") according to any of the preceding claims, **characterized in that** a metal part (40) is inserted in the edge clip part (12; 12'; 12") and reinforces the edge clip part (12; 12'; 12").

6. The fixing device (10; 10'; 10") according to claim 5, **characterized in that** the metal part (40; 40'; 40") is a clip or a spring sheet which can be bent open and which partly constricts the plug-on gap (18; 18'; 18") of the edge clip part (12; 12'; 12") when the edge (K) is not inserted in the edge clip part (12; 12'; 12").

7. The fixing device (10) according to claim 5 or 6, **characterized in that** the metal part (40) includes at least one holding tongue (42, 44) which protrudes in the plug-on gap (18; 18'; 18") and rests against the edge (K) when the fixing device (10) is in the plugged-on condition.

8. The fixing device (10) according to claim 7, **characterized in that** the protective tab (24, 26) and the holding tongue (42, 44) do not lie one above the other after placing the edge clip part (12) onto the edge (K).

9. The fixing device (10'; 10") according to any of the preceding claims, **characterized in that** the protective tab (24', 26'; 24", 26") is at least partly bent towards the plug-on gap (18', 18").

## Revendications

1. Dispositif de fixation (10; 10'; 10") pour câbles, comportant au moins une pièce d'encliquetage d'arête (12; 12' ; 12") pour le montage du dispositif de fixation (10; 10'; 10") sur une arête (K) d'une pièce de base, la pièce d'encliquetage d'arête (12 ; 12' ; 12") présentant une fente d'emboîtement (18 ; 18' ; 18") dans laquelle l'arête (K) est insérée lors de l'emboîtement de la pièce d'encliquetage d'arête (12 ; 12' ; 12") sur l'arête (K), au moins une patte de protection (24, 26 ; 24', 26' ; 24", 26") étant prévue, laquelle est articulée sur une paroi de limitation (28, 30) de la fente d'emboîtement (18 ; 18' ; 18") et s'étend vers une paroi de limitation opposée (28, 30) de la fente d'emboîtement (18 ; 18' ; 18"), **caractérisé en ce qu'**il est prévu pour la patte de protection (24, 26) un évidement (36, 38) sur la paroi de limitation opposée (28, 30) de la fente d'emboîtement (18), dans lequel la pointe (25, 27) de la patte de protection (24, 26) s'engage en partie à l'état non sollicité de la pièce d'encliquetage d'arête (12).

2. Dispositif de fixation (10 ; 10' ; 10") selon la revendication 1, **caractérisé en ce qu'**il est prévu au moins deux pattes de protection (24, 26 ; 24', 26' ; 24", 26").

3. Dispositif de fixation (10; 10', 10") selon la revendication 1 ou 2, **caractérisé en ce qu'**une patte de protection (24, 26 ; 24', 26' ; 24", 26") est respectivement agencée sur une extrémité respective de la fente d'emboîtement (18 ; 18' ; 18").

4. Dispositif de fixation (10 ; 10', 10") selon l'une des revendications 2 ou 3, **caractérisé en ce qu'**une première patte de protection (24 ; 24' ; 24") est agencée sur une paroi de limitation de la fente d'emboîtement (18 ; 18' ; 18") et **en ce qu'**une deuxième patte de protection (26 ; 26' ; 26") est agencée sur la paroi de limitation opposée de la fente d'emboîtement (18 ; 18' ; 18").

5. Dispositif de fixation (10; 10'; 10") selon l'une des revendications précédentes, **caractérisé en ce qu'**une pièce métallique (40) qui renforce la pièce d'encliquetage d'arête (12 ; 12' ; 12") est insérée dans la pièce d'encliquetage d'arête (12 ; 12' ; 12").

6. Dispositif de fixation (10 ; 10' ; 10") selon la revendication 5, **caractérisé en ce que** la pièce métallique (40 ; 40' ; 40") est une bride ou une tôle à ressort dépliable qui rétrécit partiellement la fente d'emboîtement (18 ; 18' ; 18") de la pièce d'encliquetage d'arête (12 ; 12' ; 12") lorsque l'arête (K) n'est pas insérée dans la pièce d'encliquetage d'arête (12 ; 12' ; 12").

7. Dispositif de fixation (10) selon la revendication 5 ou 6, **caractérisé en ce que** la pièce métallique (40) présente au moins une languette de retenue (42, 44) qui fait saillie dans la fente d'emboîtement (18 ; 18' ; 18") et qui repose sur l'arête (K) lorsque le dispositif de fixation (10) est emboîté.

8. Dispositif de fixation (10) selon la revendication 7, **caractérisé en ce que** la patte de protection (24, 26) et la languette de retenue (42, 44) ne reposent pas l'une sur l'autre après l'emboîtement de la pièce d'encliquetage d'arête (12) sur l'arête (K).

9. Dispositif de fixation (10; 10") selon l'une des revendications précédentes, **caractérisé en ce que** la patte de protection (24', 26' ; 24", 26") est au moins partiellement pliée dans la fente d'emboîtement (18', 18").
